# EUROPÄISCHE PATENTSCHRIFT

(11) **EP 2 737 992 B1**
(45) Veröffentlichungstag und Bekanntmachung des Hinweises auf die Patenterteilung: **29.06.2016**
(21) Anmeldenummer: 13190485.6
(22) Anmeldetag: 28.10.2013
(51) Int. Cl.: B29C 45/16, B29C 45/73

(54) **Verfahren zur variothermen Temperierung eines Spritzgießwerkzeugs**
Method for variothermal tempering of an injection moulding tool
Procédé destinés à la régulation de température variothermique d'un outil de moulage par injection

(30) Priorität: 02.12.2012 DE 102012111700
(43) Veröffentlichungstag der Anmeldung: 04.06.2014
(60) Teilanmeldung: 16164667.4
(73) Patentinhaber: Wenz Kunststoff GmbH & Co. KG, 58511 Lüdenscheid (DE)
(72) Erfinder: WELLER, Karsten, 58509 Lüdenscheid (DE)
(74) Vertreter: Patentanwälte Dörner & Kötter PartG mbB

(56) Entgegenhaltungen:
- JP-A- 2012 045 872
- JP-A- 2012 081 595
- US-A1- 2010 044 900

## Beschreibung

Die Erfindung betrifft ein Verfahren zur variothermen Temperierung eines Spritzgießwerkzeugs nach dem Oberbegriff des Patentanspruchs 1.

Vorrichtungen zur variothermen Temperierung eines Spritzgießwerkzeuges sind beispielsweise in der JP 2012 045872 A oder der JP 2012 081595 A beschrieben.

Bei der variothermen Temperierung wird die Werkzeugwand des Spritzgießwerkzeugs vor dem Einspritzvorgang auf eine Temperatur oberhalb der Glasübergangstemperatur des Kunststoffs erwärmt. Erst nach der Füllung der Kavität erfolgt eine Werkzeugkühlung, bis das Formteil die notwendige Entformungstemperatur erreicht hat. Hierzu werden in dem Spritzgießwerkzeug integrierte Kühlkanäle wechselweise warm und kalt durchströmt. Das Aufheizen der Werkzeugwand auf ein hohes Temperaturniveau erfolgt durch ein drucküberlagertes Heißwassertemperiergerät mit Vorlauftemperaturen von bis zu 180° Celsius und mehr. Das heiße Wasser wird bei Drücken von bis zu 8 bar durch die Kanäle des Spritzgießwerkzeugs gepumpt, bis die gewünschte Werkzeugtemperatur erzielt ist. Nach dem Einspritzen des Kunststoffs in die Kavität des Spritzgießwerkzeugs erfolgt das Abkühlen der Werkzeugwand über ein zweites Temperiergerät mit niedriger Vorlauftemperatur. Bei der Kombination der beiden Kreisläufe (Heizen/Kühlen) ist es unbedingt erforderlich, den Wasserdruck über den gesamten Prozess konstant zu halten, um eine Expansion des Kühlmediums zu vermeiden. Nachteilig an dem vorbekannten Verfahren ist, dass dieses durch den Einsatz von zwei Temperiergeräten sehr aufwendig ist. Die Kühlung des Kühlmediums erfolgt hier über einen Wärmetauscher, der die Abwärme über ein weiteres Kühlmedium abführt, das nicht Bestandteil des Kühlkreislaufs ist. Darüber hinaus ist die Zykluszeit des Werkzeugs mit einem solchen Verfahren nach wie vor sehr hoch.

Hier will die Erfindung Abhilfe schaffen. Der Erfindung liegt die Aufgabe zu Grunde, ein Verfahren zur variothermen Temperierung eines Spritzgießwerkzeugs zu schaffen, das aufwandminimiert und effizient durchführbar ist. Gemäß der Erfindung wird diese Aufgabe durch die Merkmale des kennzeichnenden Teils des Patentanspruchs 1 gelöst.

Mit der Erfindung ist ein Verfahren zur variothermen Temperierung eines Spritzgießwerkzeugs geschaffen, dass aufwandminimiert und effizient durchführbar ist.

Durch die unmittelbare Kopplung des Kühlkreislaufs mit dem Wassernetz ist lediglich ein Temperiergerät erforderlich. Erfindungswesentlich ist, dass das Wasser des Wassernetzes direkt als Kühlmedium in den Kühlkreislauf eingespeist wird (Direktkühlung). Der im Stand der Technik regelmäßig eingesetzte Wärmetauscher zur Kühlung des Kühlmediums innerhalb des Kühlkreislaufs entfällt. Durch die im Zulauf angeordnete Druckpumpe in Kombination mit dem im Rücklauf angeordneten Überstrom- oder Drosselventil ist die Realisierung eines konstanten Wasserdrucks innerhalb des mit dem Heizkreislauf gekoppelten Kühlkreislaufs ermöglicht. Dabei ermöglicht die hohe Temperaturdifferenz der beiden Kreisläufe signifikant reduzierte Zykluszeiten. Durch die Verbindung von Kühlkreislauf und Heizkreislauf über ein Mehrwegestück, insbesondere ein T-Stück oder Y-Stück ist ein äußerst geringer Wasseraustausch (Wasserwechsel) zwischen Heiz- und Kühlkreislauf bewirkt. Das Mehrwegestück kann dabei direkt an Vor- bzw. Rücklauf des Werkzeugs angeordnet werden. Hierdurch sind schnelle Reaktionszeiten auch bei entfernt angeordneter Ventilanordnung vom Werkzeug erzielbar.

In der Kühlphase werden zum Abkühlen des Spritzgießwerkzeugs in dem Kühlkreislauf Vor- und Rücklauf über ein Mehrwegeventil durchgängig geschaltet unter Einkopplung des Wassernetzes voneinander getrennt und in dem Heizkreislauf werden Vor- und Rücklauf über ein Mehrwegeventil unter Abkopplung gegenüber dem Temperiergerät miteinander verbunden, wobei auf der Seite des Temperiergerätes ein temporärer Standby-Kreislauf gebildet ist.

In der Kühlphase wird der Rücklauf des Kühlkreislaufs temporär über eine Bypassleitung um das Überströmventil herumgeführt. Hierdurch ist ein gesteigerter Kühlvolumenstrom bewirkt, wodurch die Abkühlzeit des Spritzgusswerkzeugs minimiert ist.

Hierzu ist in der Vorrichtung vorzugsweise eine das Überstrom- oder Drosselventil umgehende Bypassleitung in dem Rücklauf des Kühlkreislaufs angeordnet, in der ein Absperrventil angeordnet ist. Während der Kühlphase kann so kurzfristig ein hoher Volumenstrom erzielt werden, wodurch die Kühlleistung deutlich erhöht ist. Rechtzeitig vor dem Wechsel in die Heizphase kann das Absperrventil wieder geschlossen und über das Überströmventil der erforderliche Systemdruck wiederhergestellt werden.

Die Funktionalität einer solchen Bypassleitung kann alternativ, wenn auch mit signifikant schlechtem Wirkungsgrad, durch Ersetzung des Überstrom- oder Drosselventils durch ein Magnetventil erzielt werden. Dabei wird - entsprechend der Funktionalität des Bypasses - bei Kühlung das Magnetventil geöffnet, wodurch ein widerstandsfreier Durchfluss des Kühlwassers erzielt wird. In der Heizphase wird das Magnetventil geschlossen, wodurch der erforderliche Druck wieder aufgebaut wird.

Bevorzugt wird in dem temporären Standby-Kreislauf ein Wärmekondensator angeordnet. Hierdurch ist ein Aufheizen des Wärmekondensators bei kontinuierlichem Betrieb des Temperiergerätes während der Kühlphase ermöglicht. Die dort gespeicherte Wärme kann in der nachfolgenden Heizphase zum beschleunigten Aufheizen des Wassers abgegeben werden.

Unter dem Begriff "Wärmekondensator" wird vorliegend eine Vorrichtung verstanden, die - entsprechend einem Wärmepufferspeicher - eingerichtet ist, Wärme eines durchströmenden heißen Mediums aufzunehmen und zu speichern und bei nachfolgendem Durchfluss eines kälteren Mediums die gespeicherte Wärme an dieses abzugeben. Hierdurch ist zusätzlich zum Temperiergerät eine zweite Wärmequelle geschaffen, welche während eines Abkühlprozesses aufgeheizt werden kann. Während des nachfolgenden Heizprozesses kann die Wärme wieder abgegeben werden, wodurch die Aufheizzeit des Wassers verkürzt ist.

In weiterer Ausgestaltung der Erfindung wird in der Kühlphase der Rücklauf des Kühlkreislaufs temporär über einen Wärmetauscher geleitet, der mit dem Rücklauf des temporären Standby-Kreislaufs verbunden ist. Hierzu kann der Rücklauf des Kühlkreislaufs über eine ein Absperrventil aufweisende Kopplung mit dem Rücklauf des Heizkreislaufs verbunden sein, in der ein Wärmetauscher angeordnet ist. Hierdurch kann die während der Kühlphase von dem aufgeheizten Werkzeug an das Kühlwasser abgegebene Energie dem Heizkreislauf wiederzugeführt werden, wodurch der Heizprozess weiter verkürzt ist. Zudem ist hierdurch eine Energieeinsparung erzielt.

In weiterer Ausgestaltung der Erfindung wird in dem Spritzgießwerkzeug und/oder dem Rücklauf des Heizkreislaufs und/ oder des Kühlkreislaufs wenigstens ein Thermosensor angeordnet, mittels dessen eine temperaturbasierte Steuerung des Spritzgießwerkzeugs erfolgt. Hierdurch ist eine weitere Reduzierung der Zykluszeit der Herstellung eines Spritzgießprodukts erzielt.

Hierzu wir an der Vorrichtung vorzugsweise wenigstens ein Thermosensor angeordnet, der mit einer Prozesssteuerung des Spritzgießwerkzeugs verbunden ist, wodurch eine temperaturgesteuerte Prozessführung ermöglicht ist. Zum Erreichen der für den Einspritzvorgang erforderlichen Werkzeugtemperatur kann so der Einspritzvorgang der Kunststoffmasse in die Kavität des Werkzeugs angestoßen werden. Gleichsam kann bei Erreichen der für den Ausstoß des so geformten Spritzgießprodukts erforderlichen Temperatur das Öffnen des Werkzeugs mit anschließendem Ausstoß des Produkts angestoßen werden. Bevorzugt wird ein Thermosensor in dem Spritzgießwerkzeug angeordnet. Alternativ oder zusätzlich kann auch ein Thermosensor im Rücklauf des Heizkreislaufs angeordnet werden.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Fig. 1: die schematische Darstellung einer Vorrichtung zur variothermen Temperierung eines Spritzgießwerkzeugs;
- Fig. 2: die schematische Darstellung der Vorrichtung aus Figur 1 in der Aufheizphase;
- Fig. 3: die Darstellung der Vorrichtung aus Figur 1 in der Kühlphase und
- Fig. 4: die Darstellung der Vorrichtung aus Figur 1 mit zusätzlich angeordneter Kopplung.

Die als Ausführungsbeispiel gewählte Vorrichtung umfasst im Wesentlichen einen Heizkreislauf 1 sowie einen mit diesem verbundenen Kühlkreislauf 2, welche durch ein Spritzgießwerkzeug 3 geführt sind. Das Spritzgießwerkzeug 3 ist in den Figuren nur schematisch dargestellt, die den Vorlauf 31 und den Rücklauf 32 verbindenden, innerhalb des Spritzgießwerkzeugs 3 geführten Heiz- bzw. Kühlkanäle sind nicht gezeigt.

Der Heizkreislauf 1 umfasst ein Temperiergerät 11, dessen Vorlauf 12 und Rücklauf 13 mit dem Spritzgießwerkzeug 3 verbunden sind. Zur bedarfsweisen Regulierung des in dem Innenbehälters des Temperiergeräts 1 befindlichen Wasservolumens ist das Temperiergerät 11 über Versorgungsleitungen 7 mit dem Zulauf 21 des Kühlkreislaufs 2 bzw. dem Ablauf 42 des Wassernetzes 4 verbunden (in den Figuren gestrichelt dargestellt). Das Temperiergerät 1 ist in allgemein bekannter Art und Weise ausgebildet und umfasst im Wesentlichen einen Innenbehälteraufnahme eines Wasserreservoirs, eine Pumpe sowie eine Heizung. In dem Rücklauf 12 sind im Ausführungsbeispiel ein Heizgerät (Booster) 14 und ein Wärmekondensator 15 hintereinander angeordnet. Zwischen Wärmekondensator 15 und Spritzgießwerkzeug 3 ist der Vorlauf 12 mit dem Rücklauf 13 über eine Mehrwegeventilanordnung 16 verbunden.

Der Kühlkreislauf 2 ist direkt mit dem Zulauf 41 und dem Ablauf 42 eines Wassernetzes verbunden. Im Zulauf 21 des Kühlkreislaufs 2 ist eine Druckpumpe 23 angeordnet, welche zusammen mit dem im Rücklauf 22 des Kühlkreislaufs 2 angeordneten Überströmventil 24 den erforderlichen Betriebsdruck gewährleistet. Das Überströmventil 24 umgehend ist eine Bypassleitung 6 in dem Rücklauf 22 des Kühlkreislaufs 2 angeordnet, die ein Absperrventil 61 aufweist. Der Druckpumpe 23 sowie der Bypassleitung 6 nachgeschaltet sind Zulauf 21 und Rücklauf 22 des Kühlkreislaufs 2 über eine Mehrwegeventilanordnung 25 miteinander verbunden. Alternativ kann an Stelle des Überstromventils auch ein Drosselventil angeordnet sein. Für den Fall, dass - aus welchen Gründen auch immer - eine Bypassleitung vermieden werden soll, kann die Bypassfunktionalität - wenn auch mit signifikant schlechtem Wirkungsgrad - auch dadurch erzielt werden, dass das Überströmventil durch ein Magnetventil ersetzt wird. Diese Lösung ist jedoch nicht zu bevorzugen.

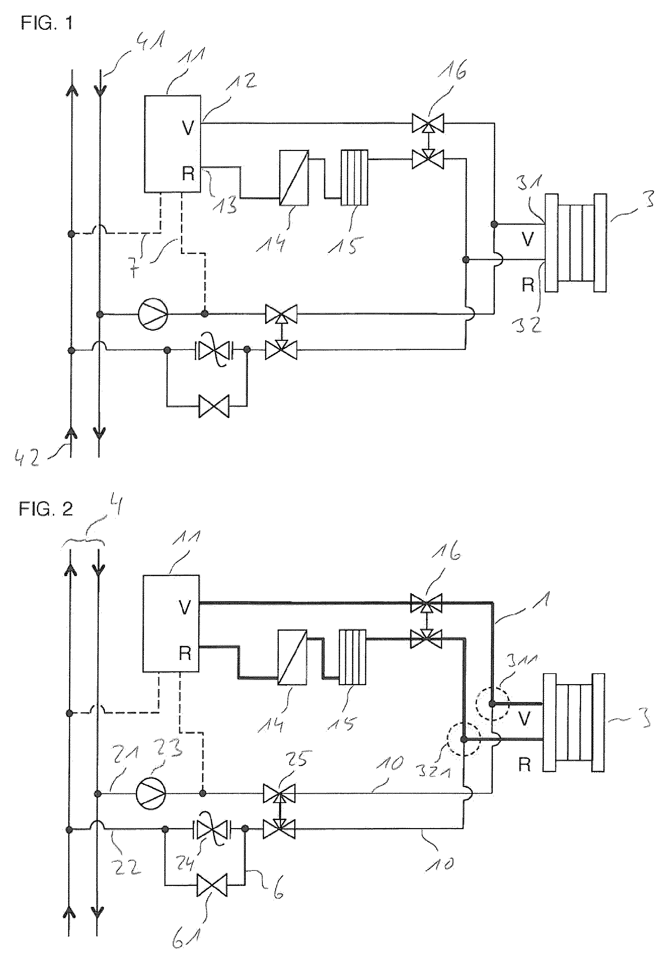

In Figur 2 ist die erfindungsgemäße Vorrichtung während der Heizphase des Spritzgießwerkzeugs 3 gezeigt. Hierbei ist die Mehrwegeventilanordnung 16 derart eingestellt, dass die Zulaufleitung 12 sowie die Rücklaufleitung 13 des Heizkreislaufs 1 durchgängig sind; die beiden Leitungen sind nicht miteinander verbunden. Die Mehrwegeventilanordnung 25 des Kühlkreislaufs 2 ist derart geschaltet, dass der Zulauf 21 sowie der Rücklauf 22 des Kühlkreislaufs 2 verbunden und jeweils wassernetzseitig gesperrt sind. Der hierdurch bewirkte Heizkreislauf 1 ist in Figur 2 mit fett ausgebildeten Linien dargestellt. Dabei spielen die T-Stücke 311, 321 über das Spritzgießwerkzeug 3 mit den Heiz- bzw. Kühlkreisläufen 1, 2 verbunden sind, eine besondere Rolle. Während der in Figur 2 fett hervorgehobene Heizkreislauf 1 zirkuliert, bildet sich in dem dünn dargestellten Abzweigungen der T-Stücke 311, 321 eine stehende Wassersäule 10 aus. Eine Vermischung des heißen Wassers des Heizkreislaufs 1 mit kaltem Wasser findet nicht statt.

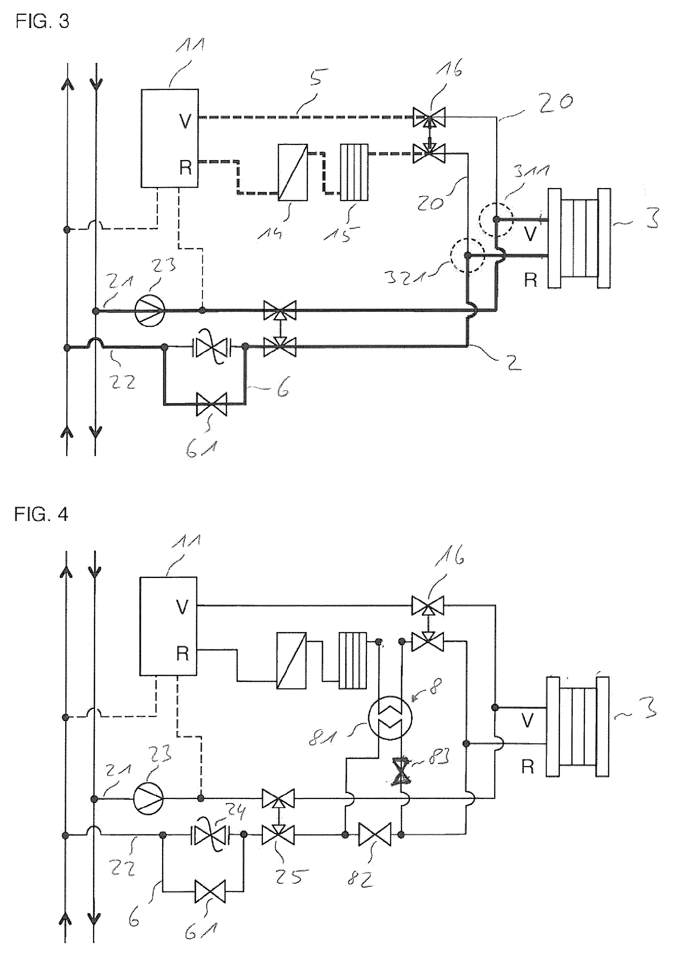

In Figur 3 ist die erfindungsgemäße Vorrichtung in der Kühlphase gezeigt. Hierbei ist die Mehrwegeventilanordnung 16 des Heizkreislaufs 1 derart geschaltet, dass Vorlauf 12 und Rücklauf 13 miteinander unter Abkopplung gegenüber dem Temperiergerät 11 miteinander verbunden sind. Die Mehrwegeventilanordnung 25 des Kühlkreislaufs 2 ist derart geschaltet, dass Zulauf 21 und Rücklauf 22 durchgängig und voneinander getrennt verlaufen. Der so hergestellte Kühlkreislauf ist in Figur 3 durch fette Linienführung dargestellt. Wiederum bildet sich in den dünn dargestellten Abzweigungen der T-Stücke 311, 321 eine stehende Wassersäule 20 aus. Eine Vermischung des heißen Wassers dieser stehenden Wassersäule mit dem fett dargestellten Kühlkreislauf 2 findet nicht statt. Dabei ist das Absperrventil 61 der Bypassleitung 6 geöffnet, wodurch ein erhöhter Volumenstrom und damit eine erhöhte Kühlleistung erzielt ist. Rechtzeitig vor Einsetzen der Heizphase wird dieses Absperrventil geschlossen, wodurch über die Druckpumpe 23 in Verbindung mit dem Überstromventil 24 der erforderliche Druck vor dem Umschalten in die Heizphase wieder aufgebaut wird.

In der Vorrichtung gemäß Figur 4 ist zusätzlich zwischen dem Rücklauf 22 des Kühlkreislaufs und dem Rücklauf 13 des Heizkreislauf eine einen Wärmetauscher 81 aufweisende Kopplung 8 vorgesehen, welche ein in dem Rücklauf 22 des Kühlkreislaufs 2 angeordnetes Absperrventil 82 umfasst. Bei geschlossenem Absperrventil 82 durchströmt das durch das aufgeheizte Spritzgießwerkzeug 3 erwärmte Wasser den Wärmetauscher 81, der in dem Standby-Kreislauf 5 eine zusätzliche Wassererwärmung bewirkt. Durch das in der Kopplung 8 angeordnete weitere Absperrventil 83 wird bei Unterschreiten einer Grenztemperatur ein unabsichtliches Kühlen des Heizkreislaufs vermieden.

## Patentansprüche

1. Verfahren zur variothermen Temperierung eines Spritzgießwerkzeugs (3) mit einer Vorrichtung, die einen Heizkreislauf (1) und einen Kühlkreislauf (2) umfasst, die durch das Spritzgießwerkzeug (3) geführt sind, wobei der Heizkreislauf (1) mit einem Temperiergerät (11) verbunden ist, wobei Kühlkreislauf (2) und Heizkreislauf (1) miteinander verbunden sind, wobei in dem Kühlkreislauf (2) und in dem Heizkreislauf (1) jeweils ein den Vorlauf (12, 21) und den Rücklauf (13, 22) verbindendes Mehrwegeventil (16, 25) angeordnet ist und wobei der Kühlkreislauf (2) direkt mit dem Wassernetz (4) verbindbar ist, wobei in dessen Zulauf (21) eine Druckpumpe (23) und in dessen Rücklauf (22) ein Überstromventil (24) oder ein Drosselventil angeordnet ist, **dadurch gekennzeichnet, dass** in der Heizphase zum Aufheizen des Spritzgießwerkzeugs (3) in dem Heizkreislauf (1) Vorlauf (12) und Rücklauf (13) über ein Mehrwegeventil (16) durchgängig geschaltet unter Einkopplung des Temperiergerätes (11) voneinander getrennt werden und in dem Kühlkreislauf (2) Vorlauf (21) und Rücklauf (22) über ein Mehrwegeventil (25) gesperrt geschaltet und unter Abkopplung gegenüber dem Wassernetz (4) miteinander verbunden werden, wobei in der Kühlphase zum Abkühlen des Spritzgießwerkzeugs (3) in dem Kühlkreislauf (2) Vorlauf (21) und Rücklauf (22) über ein Mehrwegeventil (25) durchgängig geschaltet unter Einkopplung des Wassernetzes (4) voneinander getrennt werden und in dem Heizkreislauf (1) Vorlauf (12) und Rücklauf (13) über ein Mehrwegeventil (16) unter Abkopplung gegenüber dem Temperiergerät (11) miteinander verbunden werden, wobei auf der Seite des Temperiergerätes (11) ein temporärer Standby-Kreislauf (5) gebildet ist, wobei in der Kühlphase der Rücklauf (22) des Kühlkreislaufs (2) temporär über eine Bypassleitung (6) um das Überstromventil (24) bzw. das Drosselventil herumgeführt wird.

2. Verfahren nach Anspruch 1, **dadurch gekennzeichnet, dass** in dem temporären Standby-Kreislauf (5) ein Wärmekondensator (15) angeordnet wird.

3. Verfahren nach Anspruch 1 oder 2, **dadurch gekennzeichnet, dass** in der Kühlphase der Rücklauf (22) des Kühlkreislaufs (2) temporär über einen Wärmetauscher (81) geleitet wird, der mit dem Rücklauf (13) des temporären Standby-Kreislaufs (5) verbunden ist.

4. Verfahren nach einem der vorgenannten Ansprüche, **dadurch gekennzeichnet, dass** in dem Spritzgießwerkzeug (3) und/oder dem Rücklauf (13, 22) des Heizkreislaufs (1) und/oder des Kühlkreislaufs (2) wenigstens ein Thermosensor angeordnet wird, mittels dessen eine temperaturbasierte Steuerung des Spritzgießwerkzeugs (3) erfolgt.

## Claims

1. Method for variothermal tempering of an injection moulding tool (3) having a device comprising a heating circuit (1) and a cooling circuit (2), which are guided through the injection moulding tool (3), wherein the heating circuit (1) is connected to a temperature control unit (11), wherein the cooling circuit (2) and the heating circuit (1) are connected to each other, wherein in the cooling circuit (2) and in the heating circuit (1) a multiway valve (16, 25) respectively connecting the flow (12, 21) and return (13, 22) is arranged and wherein the cooling circuit (2) can be directly connected to the water network (4), wherein in its flow (21) a pressure pump (23) and in its return (22) an overflow valve (24) or a throttle valve is arranged, **characterised in that** in the heating phase for heating the injection moulding tool (3) in the heating circuit (1) flow (12) and return (13) are switched permeable by way of a multiway valve (16) and are separated from each other under coupling of the temperature control unit (11) and in the cooling circuit (2) flow (21) and return (22) are switched closed by way of a multiway valve (25) and are connected to each other under decoupling vis-à-vis the water network (4), wherein in the cooling phase for cooling the injection moulding tool (3) in the cooling circuit (2) flow (21) and return (22) are switched permeable by way of a multiway valve (25) and are separated from each other under coupling of the water network (4) and in the heating circuit (1) flow (12) and return (13) are connected to each other by way of a multiway valve (16) under decoupling vis-à-vis the temperature control unit (11), wherein on the side of the temperature control unit (11) a temporary stand-by circuit (5) is formed, wherein in the cooling phase the return (22) of the cooling circuit (2) is temporarily guided around the overflow valve (24) or the throttle valve via a bypass line.

2. Method according to claim 1, **characterised in that** a heat capacitor (15) is arranged in the temporary stand-by circuit (5).

3. Method according to claim 1 or 2, **characterised in that** in the cooling phase, the return (22) of the cooling circuit (2) is temporarily guided via a heat exchanger (81), which is connected to the return (13) of the temporary stand-by circuit (5).

4. Method according to one of the previous claims, **characterised in that** at least one thermosensor is arranged in the injection moulding tool (3) and/or the return (13, 22) of the heating circuit (1) and/or the cooling circuit (2), by means of which a temperature-based control of the injection moulding tool (3) is carried out.

## Revendications

1. Procédé destiné à la régulation de température variothermique d'un outil de moulage par injection (3), incluant un dispositif qui comprend un circuit de chauffage (1) et un circuit de refroidissement (2) circulant à travers l'outil de moulage par injection (3), sachant que le circuit de chauffage (1) est relié à l'un appareil de régulation thermique (11), sachant que le circuit de refroidissement (2) et le circuit de chauffage (1) sont reliés entre eux, sachant que respectivement dans le circuit de refroidissement (2) et dans le circuit de chauffage (1) est agencée une vanne multivoies (16, 25) reliant le circuit aller (12, 21) et le circuit retour (13, 22), et sachant qu'il est possible de raccorder le circuit de refroidissement (2) directement au réseau d'eau (4), sachant que dans son circuit d'arrivée (21) est agencée une pompe (23) génératrice de pression et dans son circuit retour (22) une vanne de surpression (24) ou une vanne d'étranglement, **caractérisé en ce que** pendant la phase de chauffage permettant d'échauffer l'outil de moulage par injection (3), les circuits aller (12) et retour (13) dans le circuit de chauffage (1) sont coupés l'un de l'autre via une vanne multivoies (16) commutée sur sa position ouverte et avec couplage de l'appareil de régulation thermique (11), et que dans le circuit de refroidissement (2) les circuits aller (21) et retour (22) sont reliés entre eux via une vanne multivoies (25) commutée sur sa position fermée et découplés du réseau d'eau (4), sachant que pendant la phase de refroidissement servant à refroidir l'outil de moulage par injection (3), les circuits aller (21) et retour (22) du circuit de refroidissement (2) sont séparés l'un de l'autre par une vanne multivoies (25) commutée sur sa position de passage et avec couplage du réseau d'eau (4), et que les circuits aller (12) et retour (13) du circuit de chauffage (1) sont reliés entre eux via une vanne multivoies (16), avec découplage par rapport à l'appareil de régulation thermique (11), sachant que sur le côté de l'appareil de régulation thermique (11) est formé un circuit de standby (5) temporaire, sachant que pendant la phase de refroidissement le circuit retour (22) du circuit de refroidissement (2) contourne temporairement, via une conduite de bypass (6), la vanne de surpression (24) ou la vanne d'étranglement.

2. Procédé selon la revendication 1, **caractérisé en ce que** dans le circuit de standby (5) temporaire est agencé un condenseur thermique (15).

3. Procédé selon la revendication 1 ou 2, **caractérisé en ce que** durant la phase de refroidissement le circuit retour (22) du circuit de refroidissement (2) passe temporairement par un échangeur thermique (81) relié au circuit retour (13) du circuit de standby (5) temporaire.

4. Procédé selon l'une des revendications précédentes, **caractérisé en ce que** dans l'outil de moulage par injection (3) et/ou dans le circuit retour (13, 22) du circuit de chauffage (1) et/ou du circuit de refroidissement (2) est agencé au moins un capteur thermique au moyen duquel l'outil de moulage par injection (3) est piloté sur la base de la température.
